# EUROPEAN PATENT APPLICATION

(11) **EP 4 636 029 A1**
(43) Date of publication of application: **22.10.2025**
(21) Application number: 23903856.5
(22) Date of filing: 01.12.2023
(51) Int. Cl.: C08L 25/12, C08L 51/02, C08L 33/06

(54) **ECO-FRIENDLY TRANSPARENT THERMOPLASTIC RESIN COMPOSITION, AND MOLDED PRODUCT FORMED THEREFROM**

(30) Priority: 16.12.2022 KR 20220176424
(71) Applicant: LOTTE CHEMICAL CORPORATION, Seoul 05551 (KR)
(72) Inventor: KIM, Eun Jin, Uiwiang-si Gyeonggi-do 16073 (KR); PARK, Dong Hyun, Uiwiang-si Gyeonggi-do 16073 (KR); KWON, Young Chul, Uiwiang-si Gyeonggi-do 16073 (KR)
(74) Representative: Germain Maureau
(86) International application number: PCT/KR2023/019724
(87) International publication number: WO 2024/128653

(57) **Abstract**

A thermoplastic resin composition of the present invention comprises: approximately 100 parts by weight of a rubber-modified aromatic vinyl-based copolymer resin, which comprises approximately 15-35 wt% of a rubber-modified vinyl-based graft copolymer obtained by grafting, onto a rubbery polymer, an alkyl (meth)acrylate, an aromatic vinyl-based monomer and a vinyl cyanide monomer, and approximately 65-85 wt% of an aromatic vinyl-based copolymer resin obtained by polymerizing an alkyl (meth)acrylate, an aromatic vinyl-based monomer and a vinyl cyanide monomer; and approximately 1-13 parts by weight of a polyalkyl (meth)acrylate resin, wherein the alkyl (meth)acrylate in the aromatic vinyl-based copolymer resin comprises approximately 30 wt% or more of a recycled material on the basis of the total 100 wt% thereof, the haze of a specimen having a thickness of 1 mm, measured according to ASTM D1003, is approximately 3.5% or less, and light transmittance is approximately 85% or more. The thermoplastic resin composition has excellent eco-friendliness, transparency, impact resistance and rigidity, balance of physical properties thereof and the like.

## Description

### [Technical Field]

The present invention relates to an eco-friendly transparent thermoplastic resin composition and a molded product formed therefrom. More particularly, the present invention relates to a thermoplastic resin composition that has good properties in terms of eco-friendliness, transparency, impact resistance, rigidity, property balance therebetween, and the like, and a molded product formed therefrom.

### [Background Art]

Tempered glass products used for exterior materials of electric and electronic products have weak impact strength, high specific gravity, which makes it difficult to achieve weight reduction of the products, high manufacturing costs due to difficulty in processing and handling, and concerns of breakage. To overcome such disadvantages, transparent resins are applied to replace the tempered glass products. In addition, there is a need for development of recycled plastics using recycled materials in response to environmental concerns, such as carbon reduction and the like.

However, when recycled materials recovered from waste plastics are used as raw materials for thermoplastic resins, there is a problem of deterioration in transparency, mechanical properties, and the like.

Therefore, there is a need for development of a thermoplastic resin composition that has good properties in terms of eco-friendliness, transparency, impact resistance, rigidity, property balance therebetween, and the like.

The background technique of the present invention is disclosed in Korean Patent Laid-open Publication No. 10-2012-0072159 and the like.

### [Disclosure]

### [Technical Problem]

It is one object of the present invention to provide a thermoplastic resin composition that has good properties in terms of eco-friendliness, transparency, impact resistance, rigidity, property balance therebetween, and the like.

It is another object of the present invention to provide a molded product formed of the recycled thermoplastic resin composition.

The above and other objects of the present invention can be achieved by embodiments of the present invention described below.

### [Technical Solution]

1. One aspect of the present invention relates to a thermoplastic resin composition. The thermoplastic resin composition comprises about 100 parts by weight of a rubber-modified aromatic vinyl copolymer resin comprising about 15 wt% to about 35 wt% of a rubber-modified vinyl graft copolymer prepared through graft polymerization of an alkyl (meth)acrylate, an aromatic vinyl monomer and a vinyl cyanide monomer to a rubber polymer and about 65 wt% to about 85 wt% of an aromatic vinyl copolymer resin prepared through polymerization of an alkyl (meth)acrylate, an aromatic vinyl monomer and a vinyl cyanide monomer; and about 1 part by weight to about 13 parts by weight of a poly(alkyl (meth)acrylate) resin, wherein the alkyl (meth)acrylate of the aromatic vinyl copolymer resin comprises about 30% or more of a recycled material based on 100 wt% of the alkyl (meth)acrylate, and wherein the thermoplastic resin composition has a haze of about 3.5% or less and a light transmittance of about 85% or more, as measured on a 1 mm thick specimen in accordance with ASTM D1003.
2. In embodiment 1, the rubber-modified vinyl graft copolymer may comprise about 10 wt% to about 70 wt% of the rubber polymer and about 30 wt% to about 90 wt% of a monomer mixture comprising the alkyl (meth)acrylate, the aromatic vinyl monomer, and the vinyl cyanide monomer.
3. In embodiment 1 or 2, the monomer mixture may comprise about 55 wt% to about 85 wt% of the alkyl (meth)acrylate, about 10 wt% to about 40 wt% of the aromatic vinyl monomer, and about 1 wt% to about 30 wt% of the vinyl cyanide monomer.
4. In embodiments 1 to 3, the aromatic vinyl copolymer resin may be a copolymer of a monomer mixture comprising about 55 wt% to about 85 wt% of the alkyl (meth)acrylate, about 10 wt% to about 40 wt% of the aromatic vinyl monomer and about 1 wt% to about 30 wt% of the vinyl cyanide monomer.
5. In embodiments 1 to 4, the aromatic vinyl copolymer resin may have a weight average molecular weight of about 50,000 g/mol to about 200,000 g/mol.
6. In embodiments 1 to 5, the poly(alkyl (meth)acrylate) resin may comprise at least one of poly(methyl (meth)acrylate), poly(ethyl (meth)acrylate), poly(propyl (meth)acrylate), methyl (meth)acrylate, and a copolymer of a C₂ to C₁₀ alkyl (meth)acrylate.
7. In embodiments 1 to 6, the poly(alkyl (meth)acrylate) resin may have a weight average molecular weight of about 50,000 g/mol to about 130,000 g/mol.
8. In embodiments 1 to 7, the thermoplastic resin composition may have a notched Izod impact strength of about 9 kgf·cm/cm to about 30 kgf·cm/cm, as measured on a 1/8" thick specimen in accordance with ASTM D256.
9. In embodiments 1 to 8, the thermoplastic resin composition may have a tensile strength of about 370 kgf/cm² to about 500 kgf/cm², as measured on a 3.2 mm thick specimen at 5 mm/min in accordance with ASTM D638.
10. In embodiments 1 to 9, the thermoplastic resin composition may have a flexural strength of about 550 kgf/cm² to about 700 kgf/cm², as measured on a 6.4 mm thick specimen at 2.8 mm/min in accordance with ASTM D790.
11. In embodiments 1 to 10, the thermoplastic resin composition may have a flexural modulus of about 15,000 kgf/cm² to about 25,000 kgf/cm², as measured on a 6.4 mm thick specimen at 2.8 mm/min in accordance with ASTM D790.
12. Another aspect of the present invention relates to a molded product formed from the thermoplastic resin composition according to any one of embodiments 1 to 11.

### [Advantageous Effects]

The present invention provides a thermoplastic resin composition having good properties in terms of eco-friendliness, transparency, impact resistance, rigidity, property balance therebetween, and the like, and a molded product produced therefrom.

### [Best Mode]

Hereinafter, embodiments of the present invention will be described in detail.

A thermoplastic resin composition according to the present invention comprises: (A) a rubber-modified aromatic vinyl copolymer resin; and (B) a poly(alkyl (meth)acrylate) resin.

As used herein to represent a specific numerical range, "a to b" is defined as "≥a and ≤b".

### (A) Rubber-modified aromatic vinyl copolymer resin

A rubber-modified aromatic vinyl copolymer resin according to the present invention comprises (A1) a rubber-modified vinyl graft copolymer and (A2) an aromatic vinyl copolymer resin.

### (A1) Rubber-modified vinyl graft copolymer

The rubber-modified vinyl graft copolymer according to one embodiment of the invention serves to improve transparency, impact resistance, fluidity, and the like of the thermoplastic resin composition and may be prepared through graft polymerization of an alkyl (meth)acrylate, an aromatic vinyl monomer and a vinyl cyanide monomer to a rubber polymer. For example, the rubber-modified vinyl graft copolymer may be prepared through graft polymerization of a monomer mixture comprising an alkyl (meth)acrylate, an aromatic vinyl monomer and a vinyl cyanide monomer to a rubber polymer, in which the monomer mixture may further comprise a monomer for imparting processability and heat resistance, as needed. Here, polymerization may be performed by any suitable polymerization method known in the art, such as bulk polymerization, emulsion polymerization, suspension polymerization, and the like.

In some embodiments, the rubber polymer may include, for example, diene rubbers, such as polybutadiene, poly(styrene-butadiene), poly(acrylonitrile-butadiene), and the like, saturated rubbers obtained by adding hydrogen to the diene rubbers, isoprene rubbers, acrylic rubbers, such as poly(butyl acrylate) and the like, ethylene-propylene-diene terpolymer (EPDM), and the like. These may be used alone or as a mixture thereof. For example, the rubber polymer may comprise diene rubbers, specifically butadiene rubbers.

In some embodiments, the rubber polymer (rubber particles) may have an average particle diameter of about 0.1 µm to about 0.5 µm, for example, about 0.2 µm to about 0.4 µm. Within this range, the thermoplastic resin composition can have good properties in terms of impact resistance and the like without deterioration in transparency. Here, the average (z-average) particle diameter of the rubber polymer (rubber particles) may be measured by a light scattering method in a latex state. Specifically, a rubber polymer latex is filtered through a mesh to remove coagulum generated during polymerization of the rubber polymer, followed by placing a mixed solution of 0.5 g of the latex and 30 ml of distilled water in a 1,000 ml flask, which in turn is filled with distilled water to prepare a specimen. Then, 10 ml of the specimen is transferred to a quartz cell, followed by measurement of the average particle diameter of the rubber polymer using a light scattering particle analyzer (Nano ZS, Malvern Co., Ltd.).

In some embodiments, the rubber polymer may be present in an amount of about 10 wt% to about 70 wt%, for example, about 15 wt% to about 65 wt%, based on 100 wt% of the rubber-modified vinyl graft copolymer, and the monomer mixture (comprising the alkyl (meth)acrylate, the aromatic vinyl monomer and the vinyl cyanide monomer) may be present in an amount of about 30 wt% to about 90 wt%, for example, about 35 wt% to about 85 wt%, based on 100 wt% of the rubber-modified vinyl graft copolymer. Within this range, the thermoplastic resin composition can exhibit good properties in terms of impact resistance, rigidity, transparency, and the like.

In some embodiments, the alkyl (meth)acrylate may be graft copolymerizable to the rubber polymer or may be copolymerizable with an aromatic vinyl monomer and the like, and may include a C1 to C10 alkyl meth(acrylate), for example, methyl (meth)acrylate, ethyl (meth)acrylate, propyl (meth)acrylate, butyl (meth)acrylate, and the like, specifically methyl (meth)acrylate and the like. The alkyl (meth)acrylate may be present in an amount of about 55 wt% to about 85 wt%, for example, about 60 wt% to about 80 wt%, based on 100 wt% of the monomer mixture. Within this range, the thermoplastic resin composition can exhibit good properties in terms of transparency, impact resistance, rigidity, and the like.

In some embodiments, the aromatic vinyl monomer may be graft copolymerizable with the rubber polymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof. The aromatic vinyl monomer may be present in an amount of about 10 wt% to about 40 wt%, for example, about 15 wt% to about 35 wt%, based on 100 wt% of the monomer mixture. Within this range, the thermoplastic resin composition can exhibit good properties in terms of impact resistance, rigidity, transparency, and the like.

In some embodiments, the vinyl cyanide monomer is copolymerizable with the aromatic vinyl monomer and may include, for example, acrylonitrile, methacrylonitrile, ethacrylonitrile, phenyl acrylonitrile, α-chloroacrylonitrile, fumaronitrile, and the like, without being limited thereto. These may be used alone or as a mixture thereof. For example, acrylonitrile, methacrylonitrile, and the like may be used. The vinyl cyanide monomer may be present in an amount of about 1 wt% to about 30 wt%, for example, about 5 wt% to about 25 wt%, based on 100 wt% of the monomer mixture. Within this range, the thermoplastic resin composition can exhibit good properties in terms of impact resistance, rigidity, transparency, and the like.

In some embodiments, the monomer for imparting processability and heat resistance may include, for example, (meth)acrylic acid, maleic anhydride, N-substituted maleimide, and the like. The monomer for imparting processability and heat resistance may be present in an amount of 15 wt% or less, for example, about 0.1 wt% to about 10 wt%, based on 100 wt% of the monomer mixture. Within this range, the monomer for imparting processability and heat resistance can impart processability and heat resistance to the thermoplastic resin composition without deterioration in other properties.

In some embodiments, the rubber-modified vinyl graft copolymer may include a methyl methacrylate-acrylonitrile-butadiene-styrene graft copolymer (g-MABS) and the like. Here, the g-MABS may consist of polybutadiene (PBD) as a rubber polymer (core) and a methyl methacrylate-acrylonitrile-styrene copolymer shell grafted to the core, in which the shell comprises an inner shell composed of an acrylonitrile-styrene resin and an outer shell composed of poly(methyl methacrylate), without being limited thereto.

In some embodiments, the rubber-modified vinyl graft copolymer may be present in an amount of about 15 wt% to about 35 wt%, for example, about 20 wt% to about 30 wt%, based on 100 wt% of the rubber-modified aromatic vinyl copolymer resin. If the content of the rubber-modified vinyl graft copolymer is less than about 15 wt% based on 100 wt% of the rubber-modified aromatic vinyl copolymer resin, the thermoplastic resin composition can suffer from deterioration in impact resistance and the like, and if the content of the rubber-modified vinyl graft copolymer exceeds about 35 wt%, the thermoplastic resin composition can suffer from deterioration in rigidity, transparency, and the like.

### (A2) Aromatic vinyl copolymer resin

The aromatic vinyl copolymer resin according to one embodiment of the invention serves to improve eco-friendliness, transparency, impact resistance, rigidity, and the like of the thermoplastic resin composition, and may be a copolymer of a monomer mixture comprising an alkyl (meth)acrylate, which comprises about 30 wt% of a recycled material (recycled alkyl (meth)acrylate) based on 100 wt% of the alkyl (meth)acrylate, an aromatic vinyl monomer, and a vinyl cyanide monomer. For example, the aromatic vinyl copolymer resin may be prepared through typical polymerization of the monomer mixture. In addition, the monomer mixture may further include a monomer for imparting processability and heat resistance, as needed.

In some embodiments, the alkyl (meth)acrylate may be graft copolymerizable to the rubber polymer or may be copolymerizable with the aromatic vinyl monomer and the like, and may include a C₁ to C₁₀ alkyl meth(acrylate), for example, methyl (meth)acrylate, ethyl (meth)acrylate, propyl (meth)acrylate, butyl (meth)acrylate, and the like, specifically methyl (meth)acrylate and the like. The alkyl (meth)acrylate may be present in an amount of about 55 wt% to about 85 wt%, for example, about 60 wt% to about 80 wt%, based on 100 wt% of the monomer mixture. Within this range, the thermoplastic resin composition can exhibit good properties in terms of transparency, impact resistance, heat resistance, fluidity, and the like.

In some embodiments, the recycled material (recycled alkyl (meth)acrylate) may be present in an amount of about 30 wt% or more, for example, about 35 wt% or more, based on 100 wt% of the alkyl (meth)acrylate. If the content of the recycled material in the alkyl (meth)acrylate is less than about 30 wt%, the thermoplastic resin composition does not satisfy market demand for eco-friendliness.

In some embodiments, the aromatic vinyl monomer may be graft copolymerizable with the rubber polymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof. The aromatic vinyl monomer may be present in an amount of about 10 wt% to about 40 wt%, for example, about 15 wt% to about 35 wt%, based on 100 wt% of the monomer mixture. Within this range, the thermoplastic resin composition can exhibit good properties in terms of impact resistance, transparency, heat resistance, fluidity, and the like.

In some embodiments, the vinyl cyanide monomer is copolymerizable with the aromatic vinyl monomer and may include, for example, acrylonitrile, methacrylonitrile, ethacrylonitrile, phenyl acrylonitrile, α-chloroacrylonitrile, fumaronitrile, and the like, without being limited thereto. These may be used alone or as a mixture thereof. For example, acrylonitrile, methacrylonitrile, and the like may be used. The vinyl cyanide monomer may be present in an amount of about 1 wt% to about 30 wt%, for example, about 5 wt% to about 25 wt%, based on 100 wt% of the monomer mixture. Within this range, the thermoplastic resin composition can exhibit good properties in terms of impact resistance, transparency, heat resistance, fluidity, and the like.

In some embodiments, the monomer for imparting processability and heat resistance may include, for example, (meth)acrylic acid, maleic anhydride, N-substituted maleimide, and the like, without being limited thereto. The monomer for imparting processability and heat resistance may be present in an amount of 15 wt% or less, for example, about 0.1 wt% to about 10 wt%, based on 100 wt% of the monomer mixture. Within this range, the monomer for imparting processability and heat resistance can impart processability and heat resistance to the thermoplastic resin composition without deterioration in other properties.

In some embodiments, the aromatic vinyl copolymer resin may have a weight average molecular weight of about 50,000 g/mol to about 200,000 g/mol, for example, about 100,000 g/mol to about 180,000 g/mol, as measured by gel permeation chromatography (GPC). Within this range, the thermoplastic resin composition can exhibit good properties in terms of transparency, impact resistance, heat resistance, processability, and the like.

In some embodiments, the aromatic vinyl copolymer resin may be present in an amount of about 65 wt% to about 85 wt%, for example, about 70 wt% to about 80 wt%, based on 100 wt% of the rubber-modified aromatic vinyl copolymer resin. If the content of the aromatic vinyl copolymer resin is less than about 65 wt% based on 100 wt% of the rubber-modified aromatic vinyl copolymer resin, the thermoplastic resin composition can suffer from deterioration in rigidity, transparency, fluidity, and the like, and if the content of the aromatic vinyl copolymer resin exceeds about 85 wt%, the thermoplastic resin composition can suffer from deterioration in impact resistance and the like.

In some embodiments, the rubber-modified aromatic vinyl copolymer resin may include a methyl methacrylate-acrylonitrile-butadiene-styrene graft copolymer (g-MABS), which is a mixture of a methyl methacrylate-acrylonitrile-butadiene-styrene graft copolymer (g-MABS) and a methyl methacrylate-styrene-acrylonitrile copolymer (MSAN), without being limited thereto. Here, the MABS resin has a structure in which g-MABS is dispersed in MSAN.

### (B) Poly(alkyl (meth)acrylate) resin

The poly(alkyl (meth)acrylate) resin according to one embodiment of the invention serves to improve transparency, impact resistance, rigidity, and the like of the thermoplastic resin composition together with the rubber-modified aromatic vinyl copolymer resin, and may be a poly(alkyl (meth)acrylate) resin used in a typical transparent thermoplastic resin composition.

In some embodiments, the poly(alkyl (meth)acrylate) resin may be a polymer of a monomer including at least one type of C₁ to C₁₀ alkyl (meth)acrylate prepared through a polymerization method known to those skilled in the art, for example, poly(methyl (meth)acrylate), poly(ethyl (meth)acrylate), poly(propyl (meth)acrylate), methyl (meth)acrylate, a copolymer of a C₂ to C₁₀ alkyl (meth)acrylate, and the like, specifically poly(methyl methacrylate) (PMMA).

In some embodiments, the poly(alkyl (meth)acrylate) resin may have a weight average molecular weight of about 50,000 g/mol to about 130,000 g/mol, for example, about 60,000 g/mol to about 120,000 g/mol, as measured by gel permeation chromatography (GPC). Within this range, the thermoplastic resin composition can exhibit good properties in terms of transparency, impact resistance, rigidity, and the like.

In some embodiments, the poly(alkyl (meth)acrylate) resin may have a glass transition temperature of about 90°C to about 110°C, for example, about 95°C to about 110°C. Within this range, the thermoplastic resin composition can exhibit good properties in terms of heat resistance, compatibility, transparency, and the like.

In some embodiments, the poly(alkyl (meth)acrylate) resin may be present in an amount of about 1 to about 13 parts by weight, for example, about 2 to about 10 parts by weight, specifically about 3 to about 7 parts by weight, relative to about 100 parts by weight of the rubber-modified aromatic vinyl copolymer resin. If the content of the poly(alkyl (meth)acrylate) resin is less than about 1 part by weight relative to about 100 parts by weight of the rubber-modified aromatic vinyl copolymer resin, the thermoplastic resin composition can suffer from deterioration in transparency and the like, and if content of the poly(alkyl (meth)acrylate) resin exceeds about 13 parts by weight, the thermoplastic resin composition can suffer from deterioration in transparency, impact resistance, and the like.

The thermoplastic resin composition according to one embodiment of the present invention may further comprise additives, such as flame retardants, fillers, antioxidants, lubricants, release agents, nucleating agents, stabilizers, colorants, and combinations thereof within ranges that does not impair the effects of the present invention. The additives may be present in an amount of about 10 parts by weight or less, for example, about 0.01 parts by weight to about 10 parts by weight, relative to 100 parts by weight of the rubber-modified aromatic vinyl copolymer resin.

The thermoplastic resin composition according to one embodiment of the invention may be prepared in pellet form by mixing the above components, followed by melt extrusion of the mixture at about 200°C to about 280°C, for example, about 210°C to about 250°C, using a typical twin-screw extruder.

In some embodiments, the thermoplastic resin composition may have a haze of about 3.5% or less, for example, about 1% to about 3%, and a light transmittance of about 85% or more, for example, about 88% to about 95%, as measured on a 1 mm thick specimen in accordance with ASTM D1003.

In some embodiments, the thermoplastic resin composition may have a notched Izod impact strength of about 9 kgf·cm/cm to about 30 kgf·cm/cm, for example, about 10 kgf·cm/cm to about 25 kgf·cm/cm, as measured on a 1/8" specimen in accordance with ASTM D256.

In some embodiments, the thermoplastic resin composition may have a tensile strength of about 370 kgf/cm² to about 500 kgf/cm², for example, about 380 kgf/cm² to about 500 kgf/cm², as measured on a 3.2 mm thick specimen at 5 mm/min in accordance with ASTM D638.

In some embodiments, the thermoplastic resin composition may have a flexural strength of about 550 kgf/cm² to about 700 kgf/cm², for example, about 570 kgf/cm² to about 700 kgf/cm², as measured on a 6.4 mm thick specimen at 2.8 mm/min in accordance with ASTM D790.

In some embodiments, the thermoplastic resin composition may have a flexural modulus of about 15,000 kgf/cm² to about 25,000 kgf/cm², for example, about 18,000 kgf/cm² to about 25,000 kgf/cm², as measured on a 6.4 mm thick specimen at 2.8 mm/min in accordance with ASTM D790.

A molded article according to the present invention is formed from the thermoplastic resin composition as set forth above. The thermoplastic resin composition may be prepared in pellet form and may be produced into various molded articles (products) through various molding methods, such as injection molding, extrusion molding, vacuum molding, casting, and the like. These molding methods are well known to a person having ordinary knowledge in the art. The molded article has good properties in terms of eco-friendliness, transparency, impact resistance, rigidity, balance therebetween and the like, and thus can be advantageously used for interior/exterior materials of electric/electronic products, for example, housings of home appliances and the like.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Rubber-modified aromatic vinyl copolymer resin

### (A1) Rubber-modified vinyl graft copolymer

A core-shell type graft copolymer (g-MABS) prepared through graft copolymerization of 40 wt% of styrene, acrylonitrile and methyl methacrylate (styrene/acrylonitrile/methyl methacrylate: 20 wt%/10 wt%/70 wt%) to 60 wt% of butadiene rubber particles having an average particle size of 0.28 µm was used.

### (A2) Aromatic vinyl copolymer resin

(A2-1) A resin (weight average molecular weight: about 140,000 g/mol) prepared through polymerization of 73 wt% of recycled methyl methacrylate (recycled material, Manufacturer: Veolia Environment S.A., Product Name: Methyl Methacrylate), 18 wt% of styrene and 9 wt% of acrylonitrile was used.
(A2-2) A resin (weight average molecular weight: about 140,000 g/mol) prepared through polymerization of 73 wt% of methyl methacrylate (non-recycled, Manufacturer: Mitsubishi Chemical Co., Ltd., Product Name: Methyl methacrylate), 18 wt% of styrene, and 9 wt% of acrylonitrile was used.

### (B) Poly(alkyl (meth)acrylate) resin

(B1) A poly(methyl methacrylate) resin (non-recycled PMMA, Manufacturer: Asahi Kasei Co., Ltd, Product Name: DELPETTM 720V, weight average molecular weight: about 80,000 g/mol) was used.
(B2) A recycled poly(methyl methacrylate) resin (recycled PMMA, Manufacturer: Ostech Co., Ltd, Product Name: PMMA-02CP, weight average molecular weight: about 80,000 g/mol) was used.

### Examples 1 to 6 and Comparative Examples 1 to 6

The aforementioned components were mixed in amounts as listed in Table 1, followed by melt extrusion using a twin-screw extruder (L/D: 35, diameter: 45 mm) under conditions of about 230°C and about 250 rpm, thereby preparing a thermoplastic resin composition in pellet form. The prepared pellets were dried at about 80°C for about 4 hours or more and then subjected to injection molding using an injection machine (molding temperature: about 230°C, mold temperature: about 60°C), thereby preparing specimens. The prepared specimens were evaluated as to the following properties and results are shown in Table 1.

### Property evaluation

(1) Haze and light transmittance (unit: %): Haze and light transmittance (total light transmittance) were measured on a 1 mm thick specimen using a haze meter NDH 2000 (Nippon Denshoku Co., Ltd.) in accordance with ASTM D1003.
(2) Notched Izod impact strength (unit: kgf·cm/cm): Notched Izod impact strength was measured on a 1/8" thick specimen in accordance with ASTM D256.
(3) Tensile strength (unit: kgf/cm²): Tensile strength was measured on a 3.2 mm thick specimen at 5 mm/min in accordance with ASTM D638.
(4) Flexural strength (unit: kgf/cm²): Flexural strength was measured on a 6.4 mm thick specimen at 2.8 mm/min in accordance with ASTM D790.
(5) Flexural modulus (unit: kgf/cm²): Flexural modulus was measured on a 6.4 mm thick specimen at 2.8 mm/min in accordance with ASTM D790.

**Table 1**

| | | Example | | | | | |
|---|---|---|---|---|---|---|---|
| | | 1 | 2 | 3 | 4 | 5 | 6 |
| (A) (wt%) | (A1) | 20 | 25 | 30 | 25 | 25 | 25 |
| | (A2-1) | 80 | 75 | 70 | 75 | 75 | 30 |
| | (A2-2) | - | - | - | - | - | 45 |
| (B1) (parts by weight) | | 5 | 5 | 5 | 3 | 7 | 5 |
| (B2) (parts by weight) | | - | - | - | - | - | - |
| Haze (%) | | 2.5 | 2 | 2.5 | 2.5 | 3 | 2 |
| Light transmittance (%) | 89 | 90 | 88 | 89 | 88 | 90 | |
| Notched Izod impact strength (kgf·cm/cm) | 10 | 12 | 16 | 13 | 11 | 12 | |
| Tensile strength (kgf/cm²) | 480 | 430 | 380 | 420 | 440 | 430 | |
| Flexural strength (kgf/cm²) | 700 | 660 | 620 | 650 | 570 | 660 | |
| Flexural modulus (kgf/cm²) | 25,000 | 22,000 | 18,000 | 22,000 | 23,000 | 22,000 | |

| | | | | | | | |
|---|---|---|---|---|---|---|---|
| * parts by weight: parts by weight relative to 100 parts by weight of the rubber-modified aromatic vinyl copolymer resin (A) | | | | | | | |

**Table 2**

| | | Comparative Example | | | | | |
|---|---|---|---|---|---|---|---|
| | | 1 | 2 | 3 | 4 | 5 | 6 |
| (A) (wt%) | (A1) | 10 | 40 | 25 | 25 | 25 | 25 |
| | (A2-1) | 90 | 60 | - | 75 | 75 | 75 |
| | (A2-2) | - | - | 75 | - | - | - |
| (B1) (parts by weight) | | 5 | 5 | 5 | 0.1 | 15 | - |
| (B2) (parts by weight) | | - | - | - | - | - | 5 |
| Haze (%) | | 2.5 | 2.5 | 2 | 7 | 15 | 4 |
| Light transmittance (%) | | 88 | 88 | 90 | 80 | 75 | 80 |
| Notched Izod impact strength (kgf·cm/cm) | | 5 | 20 | 12 | 14 | 8 | 12 |
| Tensile strength (kgf/cm²) | | 530 | 350 | 430 | 430 | 450 | 430 |
| Flexural strength (kgf/cm²) | | 740 | 570 | 660 | 660 | 670 | 660 |
| Flexural modulus (kgf/cm²) | | 27,000 | 14,000 | 22,000 | 22,000 | 23,000 | 22,000 |

| | | | | | | | |
|---|---|---|---|---|---|---|---|
| * parts by weight: parts by weight relative to 100 parts by weight of the rubber-modified aromatic vinyl copolymer resin (A) | | | | | | | |

From the above results, it could be seen that the thermoplastic resin compositions according to the present invention were prepared using an aromatic vinyl copolymer resin containing about 30 wt% of the recycled alkyl (meth)acrylate based on 100 wt% of the total alkyl (meth)acrylate, thereby securing good properties in terms of eco-friendliness, transparency (haze, light transmittance), impact resistance (notched Izod impact strength), rigidity (tensile strength, flexural strength, flexural modulus), property balance therebetween, and the like.

Conversely, it could be seen that the thermoplastic resin composition prepared using an insufficient amount of the rubber-modified vinyl graft copolymer (A1) and an excess of the aromatic vinyl copolymer resin (A2) (Comparative Example 1) exhibited deterioration in impact resistance and the like; the thermoplastic resin composition prepared using an excess of the rubber-modified vinyl graft copolymer (A1) and an insufficient amount of the aromatic vinyl copolymer resin (A2) (Comparative Example 2) exhibited deterioration in rigidity and the like; and the thermoplastic resin composition of Comparative Example 3 prepared using only the non-recycled MSAN (A2-2) as the aromatic vinyl copolymer resin (A2) exhibited deterioration in eco-friendliness due to the absence of the recycled material. In addition, it could be seen that the thermoplastic resin composition of Comparative Example 4 prepared using an insufficient amount of the poly(alkyl (meth)acrylate) resin (B) exhibited deterioration in transparency and the like; the thermoplastic resin composition of Comparative Example 5 prepared using an excess of the poly(alkyl (meth)acrylate) resin (B) exhibited deterioration in transparency, impact resistance, and the like; and the thermoplastic resin composition of Comparative Example 6 prepared using the recycled PMMA (A2) prepared through polymerization of the recycled alkyl (meth)acrylate instead of the poly(alkyl (meth)acrylate) resin exhibited deterioration in transparency and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A thermoplastic resin composition comprising:
about 100 parts by weight of a rubber-modified aromatic vinyl copolymer resin comprising about 15 wt% to about 35 wt% of a rubber-modified vinyl graft copolymer prepared through graft polymerization of an alkyl (meth)acrylate, an aromatic vinyl monomer and a vinyl cyanide monomer to a rubber polymer and about 65 wt% to about 85 wt% of an aromatic vinyl copolymer resin prepared through polymerization of an alkyl (meth)acrylate, an aromatic vinyl monomer and a vinyl cyanide monomer; and
about 1 part by weight to about 13 parts by weight of a poly(alkyl (meth)acrylate) resin,
wherein the alkyl (meth)acrylate of the aromatic vinyl copolymer resin comprises about 30% or more of a recycled material based on 100 wt% of the alkyl (meth)acrylate, and
wherein the thermoplastic resin composition has a haze of about 3.5% or less and a light transmittance of about 85% or more, as measured on a 1 mm thick specimen in accordance with ASTM D1003.

2. The thermoplastic resin composition according to claim 1, wherein the rubber-modified vinyl graft copolymer comprises about 10 wt% to about 70 wt% of the rubber polymer and about 30 wt% to about 90 wt% of a monomer mixture comprising the alkyl (meth)acrylate, the aromatic vinyl monomer, and the vinyl cyanide monomer.

3. The thermoplastic resin composition according to claim 2, wherein the monomer mixture comprises about 55 wt% to about 85 wt% of the alkyl (meth)acrylate, about 10 wt% to about 40 wt% of the aromatic vinyl monomer, and about 1 wt% to about 30 wt% of the vinyl cyanide monomer.

4. The thermoplastic resin composition according to any one of claims 1 to 3, wherein the aromatic vinyl copolymer resin is a copolymer of a monomer mixture comprising about 55 wt% to about 85 wt% of the alkyl (meth)acrylate, about 10 wt% to about 40 wt% of the aromatic vinyl monomer, and about 1 wt% to about 30 wt% of the vinyl cyanide monomer.

5. The thermoplastic resin composition according to any one of claims 1 to 4, wherein the aromatic vinyl copolymer resin has a weight average molecular weight of about 50,000 g/mol to about 200,000 g/mol.

6. The thermoplastic resin composition according to any one of claims 1 to 5, wherein the poly(alkyl (meth)acrylate) resin comprises at least one of poly(methyl (meth)acrylate), poly(ethyl (meth)acrylate), poly(propyl (meth)acrylate), methyl (meth)acrylate, and a copolymer of a C₂ to C₁₀ alkyl (meth)acrylate.

7. The thermoplastic resin composition according to any one of claims 1 to 6, wherein the poly(alkyl (meth)acrylate) resin has a weight average molecular weight of about 50,000 g/mol to about 130,000 g/mol.

8. The thermoplastic resin composition according to any one of claims 1 to 7, wherein the thermoplastic resin composition has a notched Izod impact strength of about 9 kgf·cm/cm to about 30 kgf·cm/cm, as measured on a 1/8" thick specimen in accordance with ASTM D256.

9. The thermoplastic resin composition according to any one of claims 1 to 8, wherein the thermoplastic resin composition has a tensile strength of about 370 kgf/cm² to about 500 kgf/cm², as measured on a 3.2 mm thick specimen at 5 mm/min in accordance with ASTM D638.

10. The thermoplastic resin composition according to any one of claims 1 to 9, wherein the thermoplastic resin composition has a flexural strength of about 550 kgf/cm² to about 700 kgf/cm², as measured on a 6.4 mm thick specimen at 2.8 mm/min in accordance with ASTM D790.

11. The thermoplastic resin composition according to any one of claims 1 to 10, wherein the thermoplastic resin composition has a flexural modulus of about 15,000 kgf/cm² to about 25,000 kgf/cm², as measured on a 6.4 mm thick specimen at 2.8 mm/min in accordance with ASTM D790.

12. A molded product formed from the thermoplastic resin composition according to any one of claims 1 to 11.
